# EUROPEAN PATENT APPLICATION

(11) **EP 1 887 796 A1**
(43) Date of publication of application: **13.02.2008**
(21) Application number: 06746161.6
(22) Date of filing: 09.05.2006
(51) Int. Cl.: H04N 5/92, G11B 20/10, G11B 20/12, G11B 27/00

(54) **DATA PROCESSING DEVICE**

(30) Priority: 10.05.2005 JP 2005136858
(71) Applicant: MATSUSHITA ELECTRIC INDUSTRIAL CO., LTD., Osaka 571-8501 (JP)
(72) Inventor: KIDO, Kiyonori c/o Matsushita El. Ind. Co., Ltd., Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2006/309330
(87) International publication number: WO 2006/121049

(57) **Abstract**

To allow the user to easily designate any of data streams of the same type, included in the same content and supposed to be played back selectively, when the content starts to be played back and/or while the content is being played back.

A data processor includes: a receiving section for receiving a multiplexed stream representing a content; a recording control section for analyzing the multiplexed stream and writing it on a storage medium and outputting an instruction to write the processed stream on the medium; and a management information generating section for generating management information, needed to play back the content, based on a result of the analysis on the multiplexed stream. The multiplexed stream includes data streams of the same type to be selectively played back. The management information generating section adds, as the management information, selection information that indicates on which of the data streams the content needs to be played back. The recording control section outputs an instruction to further write the management information on the storage medium.

## Description

### TECHNICAL FIELD

The present invention relates to a technique for recording a digital broadcast stream, for example, on a storage medium and also relates to a technique for playing video from the recorded stream.

### BACKGROUND ART

The video/audio formats, program service information and other provisions for Japanese digital broadcasting industries are compliant with the ARIB standards, including ARIB STD-B10 Version 1.0 that was enacted June 19, 1997, defined by Association of Radio Industries and Businesses (ARIB). The ARIB standards designates MPEG-2 transport stream (TS) as a multiplexing format for a system layer for video, audio and other types of data.

Compared to an MPEG-2 program stream (PS) that has been used as a recording format for DVDs and other storage media, a TS can multiplex more information. For example, a plurality of video/audio elementary streams (ES) can be multiplexed together into a single stream. Or multiple programs, each of which is defined as a set of multiple ES, can also be multiplexed together into a single stream, too. The multiplexed ES can be identified with program service information called "SI/PSI", which is also multiplexed in the same TS. The SI/PSI includes not only the multiplexed information but also program titles and other sorts of additional information (program information).

Various types of ES can be multiplexed together in a TS, thus realizing a program including a plurality of audio ES (e.g., a Japanese language audio ES and an English language audio ES) and a multi-view sport program including a plurality of video ES, for example. It is true that such a program, including a plurality of audio ES or a plurality of video ES, provides a broader variety of presentations than a program including only one ES. But the video or audio that can be output is still limited by the number of those ES. That is why to realize an even broader spectrum of presentations, the number of ES cannot but be increased. Taking the amount of data into consideration, too, the range of presentations cannot always be broadened effectively by such a method.

Patent Document No. 1 discloses a technique for making presentations in a greater number of modes than that of the multiplexed ES. Specifically, according to Patent Document No. 1, the broadcaster creates and transmits by itself information that instructs what ES should be switched for viewing (which is called a "multi-view automatic switching table"). By reference to the multi-view automatic switching table, the user's device changes the ES into the designated one during playback. According to this technique, the ES to view and listen to are changed at the timing specified by the broadcaster. As a result, video, audio and other data can be apparently presented in a greater number of modes than that of the ES.

When a program is digitally recorded, not just the stream itself but also the management information of that stream are often stored simultaneously. The table disclosed in Patent Document No. 1 just mentioned may be regarded as one of those pieces of management information. By using the management information, the title and other sorts of additional information can be entered, an arbitrary playback procedure can be defined, or an entry point for instantaneous playback can be set, for instance. On top of that, if time information and address information are managed in association with each other, the random accessibility can be improved and fast forward, rewind, slow playback modes and other types of special playback modes are realized, too.

The format of the management information is defined by the standard that is associated with the type of the given storage medium. For example, as for DVD-RAMs and DVD-Rs or DVD-RWs, the format of their management information is defined by the DVD Video Recording (DVD-VR) standard. As for Blu-ray Discs, the format of their management information is defined by the Blu-ray Rewritable standard (which will be referred to herein as the "BD-RE condition"). The formats of the management information of semiconductor media such as SD memory cards are defined by still another standard.
**Patent Document No. 1:** Japanese Patent Application Laid-Open Publication No. 2002-314960

### DISCLOSURE OF INVENTION

### PROBLEMS TO BE SOLVED BY THE INVENTION

Currently, it is certainly possible to record a program including a plurality of ES and play back the program using its management information. As long as the current standards should be complied with, however, the viewer (or user) could not set various parameters of playback so flexibly. This is because most of those existent standards were established so as to be applied to recording conventional analog broadcasts, not a program including a plurality of ES such as a multi-view program.

The same is true of the standard that is supposed to be applied to recording a TS of a digital broadcast (i.e., the BD-RE standard). Specifically, if a program including a plurality of ES is recorded and played back, the top ES that is actually played back earlier than any other ES could be different from one device to another. This is because it is the device that determines which ES to play back first. Also, to play back a different ES from what is supposed to be played back first, the playback of that first ES needs to be started once, and then the user needs to change the ES manually, which is very inconvenient for him or her because he or she always has to do the same operation every time he or she wants to get something played. Particularly if a plurality of video ES and a plurality of audio ES were included, he or she would have to select his or her preferred video ES and audio ES, respectively. In view of these inconveniences, even if a program including a plurality of ES is recorded, there is still a long way to go to make full use of its advantageous features.

Also, even if the user wants to change ES at an arbitrary point in time half way through such a program including a plurality of ES, not just after the program has started, he or she still has no choice but changing them manually during the playback. What is more, the favorite change pattern is not saved. That is why even if the user wants to view and listen to the same program a number of times, he or she has to go through the same series of operations all over again each time, which is troublesome for him or her, too.

A technique for defining the playback route by adopting the idea called "playlist" is already known in the art. The playlist can certainly be used to define a playback route either within the same ES or in two consecutive ES of two different programs. However, the playlist can define no playback route over multiple different ES of a single program. That is why the inconveniences mentioned above would still persist even if the conventional playlist were used.

Besides, since those multiple ES are not usually supposed to be changed arbitrarily during the playback, it is not clearly shown to the user that the program in question includes a plurality of ES. That is to say, the information showing whether there are multiple ES or not is not readily available for the user, which is very inconvenient for him or her.

An object of the present invention is to allow the user to easily designate any one of multiple data streams of the same type, all of which are included in the same content recorded and which are supposed to be played back selectively, as a data stream to play when the content starts to be played back and/or while the content is being played back. Another object of the present invention is to allow the user to make his or her best choice by making the content playback modes, which are either defined for the respective data streams or designated by the user himself or herself, easily understandable for him or her.

### MEANS FOR SOLVING THE PROBLEMS

A data processor according to the present invention includes: a receiving section for receiving a multiplexed stream representing a content; a recording control section for performing processing of analyzing the multiplexed stream and writing the stream on a storage medium and for outputting an instruction to write the processed multiplexed stream on the storage medium; and a management information generating section for generating management information, which is needed to play back the content, based on a result of the analysis on the multiplexed stream. The multiplexed stream includes a plurality of data streams of the same type to be selectively played back. The management information generating section adds, as the management information, selection information that indicates on which of the data streams the content needs to be played back. The recording control section outputs an instruction to further write the management information on the storage medium.

The management information generating section may add, as the selection information, identification information to identify the selected data stream and start point information showing a playback start point on the selected data stream to the management information.

The management information generating section may further generate end point information showing a playback end point on the data stream identified and may get the end point information included in the management information.

The management information generating section may generate multiple pieces of the selection information and add those pieces to the management information.

In playing back the content on and after a first time, the management information generating section may generate, as a first piece of selection information, identification information to identify a first data stream and start point information to specify the first time as the playback start point. In playing back the content on and after a second time, which is later than the first time, the management information generating section may generate, as a second piece of selection information, identification information to identify a second data stream, which is different from the first data stream, and start point information to specify the second time as the playback start point.

The management information generating section may generate the start point information based on a playback start point that has been specified by a user.

The management information generating section may generate the start point information based on a playback start point that has been set in advance.

The data processor may further include: an instruction receiving section for receiving a delete instruction to delete a designated playback route; and a recording control section for outputting an instruction to delete, from the storage medium, one of the data streams that is associated with the playback route designated and information about the designated playback route that is included in the management information.

A storage medium according to the present invention stores thereon: a stream file including a multiplexed stream representing a content; and a management information file including management information, which is needed to play back the content. A plurality of data streams of the same type to be selectively played back have been multiplexed together in the multiplexed stream. The management information includes selection information that indicates on which of the data streams the content needs to be played back.

Another data processor according to the present invention includes: a playback control section for reading the management information file and the stream file from the storage medium described above; a management information analyzing section for retrieving the selection information from the management information file that has been read out and giving an instruction that the data stream, designated by the selection information, be extracted; a separating section for separating the data stream from the multiplexed stream in accordance with the instruction; and a decoder for playing back the content based on the separated data stream.

In playing back the content on and after a first time, the management information may include, as a first piece of selection information, identification information to identify a first data stream and start point information to specify the first time as the playback start point. In playing back the content on and after a second time, which is later than the first time, the management information may include, as a second piece of selection information, identification information to identify a second data stream, which is different from the first data stream, and start point information to specify the second time as the playback start point. In accordance with the first and second pieces of selection information, the management information analyzing section may instruct that the first data stream be extracted from the first time until the second time and instruct that the second data stream be extracted on and after the second time.

The data processor may further include a graphic control section for generating a signal to present video on an external device in accordance with control information. The management information analyzing section may output control information that shows the presence of a plurality of playback routes in accordance with the first and second pieces of selection information. And the graphic control section may output a signal to present pictures, associated with the respective playback routes, side by side in accordance with the control information.

Still another data processor according to the present invention is used to edit a content. The content has been stored in advance as a multiplexed stream on a storage medium. The multiplexed stream includes a plurality of data streams of the same type to be selectively played back. The processor includes: an instruction receiving section for receiving an instruction to select one of the data streams from a user; and a management information generating section for generating selection information to designate the selected data stream as a target and outputting the selection information as management information.

The instruction receiving section may further receive an instruction to specify a playback start point, and the management information generating section may generate, as the selection information, identification information to identify the data stream selected and start point information showing the start point.

The data processor may further include a recording control section for outputting an instruction to write the selection information on the storage medium.

The data processor may further include a memory to store the selection information.

The instruction receiving section may receive instructions to select data streams and instructions to specify playback start points a number of times, and the management information generating section may generate multiple pieces of selection information.

The data processor may further include a graphic control section for generating a signal to present video on an external device in accordance with the control information. The management information generating section may output control information, which defines the order of presentation of the data streams and playback intervals of the respective data streams in accordance with the selection information. The graphic control section may output a video signal, representing the order and the playback intervals, based on the control information.

### EFFECTS OF THE INVENTION

According to the present invention, to a multiplexed stream in which a number of different types of data streams (ES) representing video, audio and data, for example, are multiplexed together, added as management information is ES selection information that indicates which ES should be selected by default for the respective types when playback is started. Since the player automatically plays back an ES, which have been selected by the ES selection information, in playing back a multiplexed stream, there is no need for the user to designate the same ES repeatedly once the selection has been made.

### BRIEF DESCRIPTION OF DRAWINGS

FIG. **1** shows an arrangement of functional blocks in a recorder **100** with a built-in hard disk drive according to a preferred embodiment of the present invention.
FIG. **2** shows an arrangement of functional blocks in a digital tuner **201a** and a recording-related portion of a TS processing section **204.**
FIG. **3** shows an arrangement of functional blocks in a playback-related portion of the TS processing section **204** and a decoder **206.**
   Portions **(a)** through **(e)** of FIG. **4** show a correlation between a transport stream and a clip AV stream that has to do with the recording processing carried out by the recorder **100.**
FIG. **5** shows a storage area on the BD **205a** and its directory/file structure.
FIG. **6** schematically shows a plurality of ES included in a clip AV stream **85.**
   Portions **(a)** through **(d)** of FIG. **7** show a relationship between the management information and the stream data.
FIG. **8** shows the information (entries) stored in the playlist file **83** and its data structure.
FIG. **9** is a flowchart showing the procedure of recording processing.
FIG. **10** is a flowchart showing the procedure of generating a playlist.
FIG. **11(a)** shows relations between real/virtual playlists that define the default ES designating marks and multiple video ES, and FIG. **11(b)** shows an example of a list screen picture **510** in a situation where there are playlists with video default ES designating marks.
FIG. **12(a)** shows relations between real/virtual playlists that define the default ES designating marks and multiple audio ES, and FIG. **12 (b)** shows an example of a list screen picture **510** in a situation where there are playlists with audio default ES designating marks.
FIG. **13** shows an example in which the ES are changed into a desired one at an arbitrary timing.
   Portion **(a)** of FIG. **14** shows an example of a graphical user interface (GUI) that is displayed on an editing screen, and portion **(b)** of FIG. **14** shows correlations between the ES being edited and the default ES designating mark.
FIG. **15** shows the arrangement of functional blocks in the TS processing section **204** for carrying out the editing process shown in FIG. **14****.**

### DESCRIPTION OF REFERENCE NUMERALS

- **100**: BD recorder with built-in HDD
- **112**: memory card
- **114**: BD
- **201a**: digital tuner
- **201b**: analog tuner
- **202**: A/D converter
- **203**: MPEG-2 encoder
- **204**: TS processing section
- **205a**: BD
- **205b**: HDD
- **206**: MPEG-2 decoder
- **207**: graphic control section
- **208**: memory
- **209**: D/A converter
- **210**: program ROM
- **211**: CPU
- **212**: RAM
- **213**: CPU bus
- **214**: network control section
- **215**: instruction receiving section
- **216**: interface (I/F) section
- **217**: memory card control section
- **250**: system control section
- **251**: tuner section
- **252**: demultiplexer
- **253**: management information generating section
- **254**: recording control section
- **255**: playback control section
- **256**: management information analyzing section
- **257**: demultiplexer
- **258**: video decoder
- **259**: audio decoder
- **260**: data decoder

### BEST MODE FOR CARRYING OUT THE INVENTION

Hereinafter, preferred embodiments of a data processor according to the present invention will be described with reference to the accompanying drawings. In the following description, the data processor is supposed to be an optical disk recorder with a built-in hard disk drive. On the optical disk, stored are stream data and a management information file that specifies a playback procedure. As formats for recording such stream data and its associated management information, the DVD-VR, BD-RE and other standards were set up for the respective types of storage media. In this preferred embodiment, the optical disk is supposed to be a Blu-ray disc (BD) and a recording operation compliant with the BD-RE standard will be described as an example. According to the BD-RE standard, stream data is written in the MPEG-2 transport stream (TS) format. Since TS is used, even a digital broadcast stream including a plurality of ES can be written as it is almost without modifying the stream.

In this preferred embodiment, a number of elementary streams (ES) of the same type are supposed to be multiplexed together in a TS representing a single content (such as a single telecast) and are also supposed to be selectively played back. As used herein, the "type" refers to video, audio or subtitles, for example. That is why if a number of ES of the same type are included, a plurality of video ES may be included, for example. Also, in this preferred embodiment, "to play back a content" means outputting video, audio and/or subtitles based on at least one ES, no matter whether their types are the same or not.

Hereinafter, an optical disk recorder according to this preferred embodiment will be outlined first.

The optical disk recorder includes a receiving section for receiving a TS representing a content. The receiving section extracts necessary program packets from the TS received, generates a partial TS, and then sends it to a TS processing section. In response, the TS processing section analyzes the TS, performs processing to get ready to write it on a storage medium (such as an optical disk or a hard disk), and then writes it as a stream file on the storage medium. In addition, the TS processing section also generates management information about the content playback route based on the result of the analysis.

The configuration and operation of the TS processing section will be described in further detail. Specifically, the TS processing section includes a management information generating section and a recording control section. The management information generating section adds, as a piece of management information, selection information that designates one of multiple ES that should be used to play back the content. Then, the recording control section further writes that piece of management information as a management information file on the storage medium. For example, if there are three video ES (showing video at angles #1, #2 and #3, respectively) in a sport telecast, the user can designate one of those three ES that the playback should start with. Likewise, if there are three audio ES (in the three different languages of Japanese, English and Chinese) in a movie, he or she can also designate one of those three ES that the playback should start with. The recording control section adds, as a piece of management information, selection information that indicates which ES to select. If the user designates which ES to select when adding a program to his or her scheduled recording list, then management information, including that selection information, is generated and stored on the storage medium during recording. As a result, when the user views or listen to the recorded program for the first time, he or she can start playing back the program with his or her designated video and audio ES.

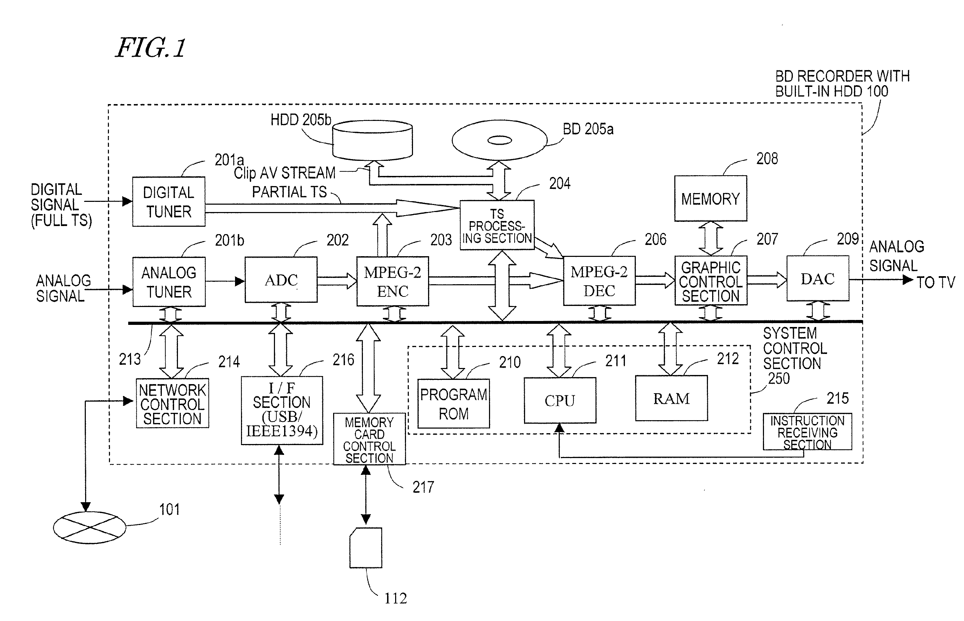

Next, the specific configuration of a BD recorder 100 with a built-in hard disk drive according to this preferred embodiment (which will be simply referred to herein as a "recorder **100"**) will be described with reference to FIGS. **1** through **3****.** FIG. **1** shows an arrangement of functional blocks in the recorder **100.** The recorder **100** includes not only a BD **205a** but also a hard disk **205b** as storage media.

The recorder **100** includes a digital tuner **201a,** an analog tuner **201b,** an A/D converter **202,** an MPEG-2 encoder **203,** a TS processing section **204,** an MPEG-2 decoder **206,** a graphic control section **207,** a memory **208,** a D/A converter **209,** a CPU bus **213,** a network control section **214,** an instruction receiving section **215,** an interface (I/F) section **216,** a memory card control section **217** and a system control section **250.** In FIG. **1****,** the optical disk **205a** is shown within the recorder **100.** However, the optical disk **205a** is removable from the recorder **100** and does not form an integral part of the recorder **100** itself.

Hereinafter, the functions of these components will be described one by one. The digital tuner **201a** receives a digital signal including at least one program from the antenna (not shown). An MPEG-2 transport stream (TS) to be transmitted as the digital signal includes packets representing a plurality of programs. Such a transport stream including packets representing a plurality of programs will be referred to herein as a "full TS", which further includes various types of control packets (including PSI packets such as a program association table packet and a program map table packet and SI packets) that are needed to extract data of a particular program from a plurality of programs. The digital tuner **201a** tunes itself to a particular channel, extracts packets representing a requested program and required control packets from the full TS, subjects them to a predetermined type of processing, and then outputs them as a "partial TS". The digital tuner **201a** also outputs control information (stream information) about a partial TS that was acquired when the partial TS was generated.

The packets on a desired channel may be extracted from the full TS in the following manner. Suppose the program number (or channel number) of the designated program is X. In that case, first, the full TS is searched for the program association table packet (PAT_TSP). The packet ID (PID) of the program association table packet is always zero. Thus, a packet having that value may be searched for. In the program association table in the program association table packet, respective program numbers and the program map table packet (PMT_TSP) PIDs of respective programs associated with those program numbers are stored. Thus, the packet ID (PID) of the program map table (PMT) associated with the program number X can be detected. The PID of the program map table PMT is supposed to be XX.

Next, when the program map table packet (PMT_TSP) with PID=XX is extracted, a program map table PMT associated with the program number X can be obtained. The program map table PMT includes the PIDs of TS packets, in which the video and audio information of each program to watch and listen to is stored on a program-by-program basis. For example, the PID of the video information associated with the program number X may be XV and the PID of the audio information thereof may be XA. By using the PID (=XV) of the packet storing the video information and the PID (=XA) of the packet storing the audio information that have been obtained in this manner, the video and audio packets about a particular program can be extracted from a full TS.

In making a partial TS from a full TS, not only those packets that store the required video and audio information but also program specific information (PSI) packets and service information (SI) packets need to be extracted and corrected. As used herein, the PSI packets collectively refer to the program association table packets (PAT_TSP) and program map table packets (PMT_TSP). The PSI packets need to be corrected because the full TS and the partial TS include different numbers of programs, and therefore, the program association table and the program map table need to be adapted to the partial TS. The SI packet includes data describing the contents, schedule/timings and so on of the programs included in the full TS and separately defined expansion information (which is also called "program service information"). In the full TS, the SI packet includes as many as 20 to 30 different types of data. Among these types of data, only important data for playing back the partial TS is extracted to generate a single SIT packet and multiplex it in the partial TS. Also, in the partial TS, information indicating that the stream is a partial TS (which is called a "partial transport stream descriptor") is stored in the SIT packets. It is already a conventional technique to multiplex an SIT packet in a partial TS so as to comply with the European and Japanese digital broadcasting standards (DVB/ARIB).

The analog tuner **201b** receives an analog signal from the antenna (not shown), tunes itself to a particular channel according to the frequency, extracts the signal of a requested program, and then outputs the video and audio signals of the program to the A/D converter **202.**

The A/D converter **202** converts the input signals into digital ones and supplies them to the MPEG-2 encoder **203.** On receiving an instruction to start recording, the MPEG-2 encoder **203** (which will be simply referred to herein as an "encoder **203**") compresses and encodes the supplied digital data of the analog broadcast into the MPEG-2 format, generates a transport stream and passes it to the TS processing section **204.** This processing is continued until the encoder **203** receives an instruction to end the recording. To perform the compression coding, the encoder **203** includes a buffer (not shown) for temporarily storing reference pictures and so on. If the program is viewed while being recorded, the encoder **203** supplies the transport stream to the MPEG-2 decoder 206.

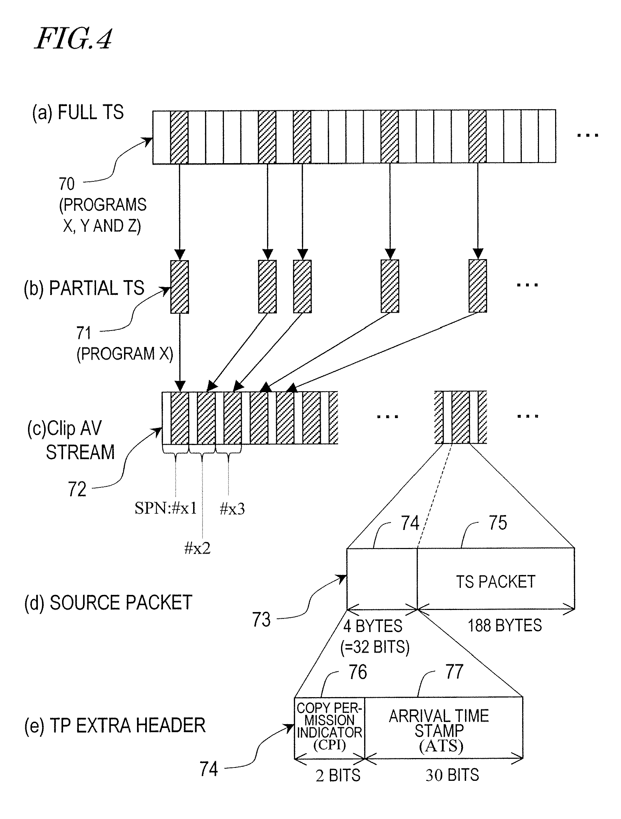

In recording moving pictures, the TS processing section **204** receives the partial TS, generates a clip AV stream from it, and records the stream on the BD **205a** and/or the HDD **205b.** The clip AV stream is a data stream, of which the format is suitable for recording it on the BD **205a.** The clip AV stream is made up of a plurality of source packets, which are generated by adding a predetermined header to the respective TS packets that form the partial TS. The processing of generating the clip AV stream will be described more fully later with reference to FIGS. **4(a)** through **4(e)****.** In this preferred embodiment, the format of the stream recorded on the HDD **205b** is also supposed to be a clip AV stream for convenience sake.

While generating the clip AV stream, the TS processing section **204** generates management information for controlling playback of that stream from the BD **205a** and managing the data locations of the various types of data stored, and writes it on the BD **205a.**

In playing back moving pictures, the TS processing section **204** reads the clip AV stream and the management information from the BD **205a** and/or the HDD **205b,** generates a partial TS based on the management information and the clip AV stream, and outputs them to the MPEG-2 decoder **206.**

The TS processing section **204** may also operate so as to transmit and receive the management information and the clip AV stream to/from a memory card control section **217** to be described later. As a result, the TS processing section **204** can record a program on the memory card **112** and play back the recorded program from the memory card **112.** In addition, the TS processing section **204** also mediates the transfer of data when the management information and clip AV stream are copied or moved between multiple types of storage media.

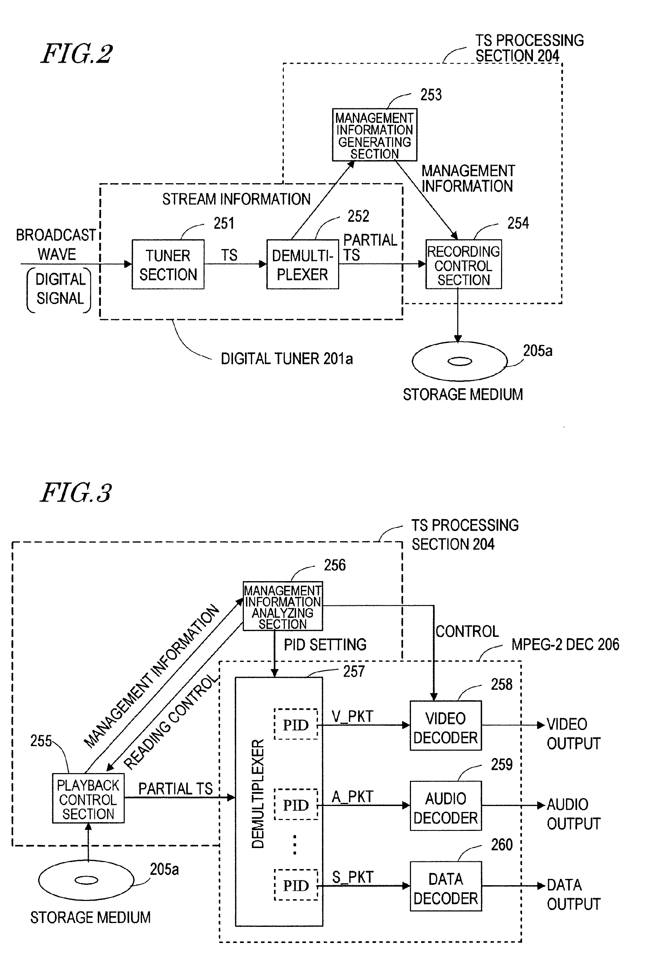

A more detailed configuration and operation of the TS processing section **204** will be described more fully later with reference to FIGS. **2, 3** and **10****.** In this description, the TS processing section **204** is supposed to write data on the BD **205a** and/or the HDD **205b** and read data from at least one of them just for illustrative purposes. Actually, however, the stream is written on, or read from, the BD **205a** or HDD **205b** by controllers (not shown) provided for the respective drives as the disk rotates and as the head moves. The TS processing section **204** gives instructions to those controllers and exchanges data with them, thereby getting the data written to and read from them.

The MPEG-2 decoder **206** (which will be simply referred to herein as a "decoder **206**") analyzes the partial TS supplied to get MPEG-2 compression-encoded data. Then, the decoder **206** expands the compression-encoded data, converts it into decompressed data and then passes it to the graphic control section **207.** The decoder **206** can convert not only the MPEG-2 compression encoded data but also still picture data compliant with the JPEG standard into decompressed data. The graphic control section **207** is connected to the internal computer memory **208** and realizes an on-screen display (OSD) function. For example, the graphic control section **207** combines any of various menu pictures with the video and outputs the resultant synthetic image to the D/A converter **209.** In response, the D/A converter **209** converts the input OSD synthetic image and audio data into analog data and outputs them to the TV (not shown).

The CPU bus **213** is a path for transferring signals in the recorder **100** and is connected to the respective functional blocks as shown in FIG. **1****.** In addition, the respective components of the system control section **250** to be described later are also connected to the CPU bus **213.**

The network control section **214** is an interface for connecting the recorder **100** to the network **101** such as the Internet and is a terminal and a controller that are compliant with the Ethernet^{™} standard, for example. The network control section **214** exchanges data over the network **101.** The data may be timetable data about broadcast programs and updated data of a software program for controlling the operation of the recorder **100.**

The instruction receiving section **215** is a photodetector section for receiving an infrared ray from the operating button arranged on the body of the recorder **100** or from a remote controller. The instruction receiving section **215** receives a user's instruction to start or stop a recording operation or to start or stop playing back a recorded program. Furthermore, the instruction receiving section **215** receives a user's instruction on scheduled recording, the on-air date and time and the channel of a program on the scheduled recording list and on what ES should be set as a default ES as will be described later.

The interface (I/F) section **216** controls the connector for use to allow the recorder **100** to communicate with other devices and also controls the communications themselves. The I/F section **216** includes a terminal compliant with the USB 2.0 standard, a terminal compliant with the IEEE 1394 standard, and a controller for enabling data communications according to any of these various standards and can exchange data according to a method that complies with any of these standards. For example, the recorder **100** may be connected to a PC or a camcorder (not shown) by way of the USB 2.0 terminal and to a digital high-definition TV tuner or the camcorder (not shown) by way of the IEEE 1394 terminal, respectively.

The memory card control section **217** includes a slot for loading the memory card **112** into the recorder **100** and a controller for controlling data communications between the recorder **100** and the memory card **112.** The memory card control section **217** reads out a still picture data file, a moving picture data file or any other file from the memory card **112** loaded and transmits it over the CPU bus **213.**

The system control section **250** controls the overall processing of the recorder **100** including the signal flows there and includes a program ROM **210,** a central processing unit (CPU) **211** and a RAM **212,** all of which are connected to the CPU bus **213.** A software program for controlling the recorder **100** is stored in the program ROM **210.**

The CPU **211** controls the overall operation of the recorder **100.** By reading and executing a program, the CPU **211** generates a control signal to realize the processing defined by the program and outputs the control signal to the respective components over the CPU bus **213.** Examples of the processing defined by the program include the reception processing, recording processing, playback processing and editing processing to be described later.

The memory **212** has a work area for storing data that is needed for the CPU **211** to execute the program. For example, the CPU **211** reads out a program from the program ROM **210** and outputs it to the random access memory (RAM) **212** through the CPU bus **213** and executes the program.

The computer program may be circulated on the market by being stored on a storage medium such as a CD-ROM or downloaded over telecommunications lines such as the Internet. As a result, a computer system that is set up using a PC and so on can also operate as a data processor having functions that are equivalent to those of the recorder **100** of this

### preferred embodiment.

FIG. **1** shows a single recorder **100** having multiple functions of reception, recording and playback. However, these functions are actually independent of each other. That is why if the same signals as those shown in FIG. **1** can be exchanged, these functions may be realized by multiple devices. For example, the functions of the tuners **201a, 201b,** decoder **206,** graphic control section **207,** and DAC **209** may be realized by a TV (not shown), the HDD **205b** may be provided as an independent device, and the TV, recorder and HDD **205b** may be connected together through an IEEE 1394 cable.

Next, the function of the digital tuner **201a** and the recording related function of the TS processing section **204** will be described in further detail with reference to FIG. **2****,** which shows the arrangement of functional blocks of the digital tuner **201a** and the TS processing section **204** to carry out the recording processing. The digital tuner **201a** includes a tuner section **251** and a demultiplexer **252.** The TS processing section **204** includes a management information generating section **253** and a recording control section **254.**

The tuner section **251** of the digital tuner **201a** receives a digital broadcast wave and extracts a full TS from it. Thereafter, the demultiplexer **252** generates a partial TS, including the data of the program to be recorded, based on the full TS and sends it to the recording control section **254.** The demultiplexer **252** also outputs control information about the partial TS (stream information) that was acquired while generating the partial TS. That is to say, the demultiplexer **252** extracts stream information, including SI/PSI and ES feature point, from the stream and sends it to the management information generating section **253** while turning the full TS into the partial TS. As a result, the management information generating section **253** generates management information including the stream information.

The recording control section **254** writes the received partial TS and management information on a storage medium **205a.** It should be noted that the recording control section **254** does not write the partial TS itself on the BD **205a** but performs processing to add a predetermined extension header to generate a clip AV stream and then writes the stream on the BD **205a.** This processing will be described in detail later with reference to FIG. **4****.**

Next, the playback related function of the TS processing section **204** and the function of the decoder **206** will be described in detail with reference to FIG. **3****.**

FIG. **3** shows the arrangement of functional blocks of the TS processing section **204** and the decoder **206** to carry out the playback related processing. To start a playback operation, first, the playback control section **255** reads a management information file from the storage medium **205a.** In accordance with the management information that has been read out, the management information analyzing section **256** controls reading of the partial TS by the playback control section **255,** thereby getting the partial TS input to the demultiplexer **257.** At the same time, the management information analyzing section **256** sets a packet identifier (PID) on the demultiplexer **257** and instructs the demultiplexer **257** to separate a TS packet with that PID. In accordance with that instruction and the PID setting, the demultiplexer **257** extracts only a TS packet with that packet identifier from the partial TS and outputs the packet separately. PID setting is done on each of video, audio and subtitles.

Each of the three ES that have been separated by the demultiplexer **257** is input to its associated decoder, which is a video decoder **258,** an audio decoder **259** or a data decoder **260.** The management information analyzing section **256** instructs the respective decoders **258** through **260** to decode the respective ES. In accordance with this instruction, the video decoder **258** decodes a video ES, the audio decoder **259** decodes an audio ES and the data decoder **260** decodes a subtitle ES. Then, the respective decoders **258, 259** and **260** output those decoded ES as digital signals.

In a situation where there are a number of ES in a single TS, if the TS needs to be output to a normal TV, for example, one type of video and one type of audio are extracted and played and output. If additional data such as subtitles is also included, selection and decoding are done in a similar manner. When the user submits a request to change ES, the management information analyzing section **256** sets a different PID on the demultiplexer **257** and instructs the demultiplexer **257** to separate another ES. The management information analyzing section **256** also instructs the respective decoders **258** to **260** to perform decoding. Then, TS packets with the redefined PID are extracted and different ES are decoded.

In a situation where a number of ES of the same type are included in a single program (e.g., even if a number of video ES that are shot at different angles are included), the ES data associated with the respective angles are stored in TS packets with different PIDs for the respective ES. That is why by using the PID, only an ES associated with the particular angle can be extracted. Quite the same statement applies to audio and subtitles, too.

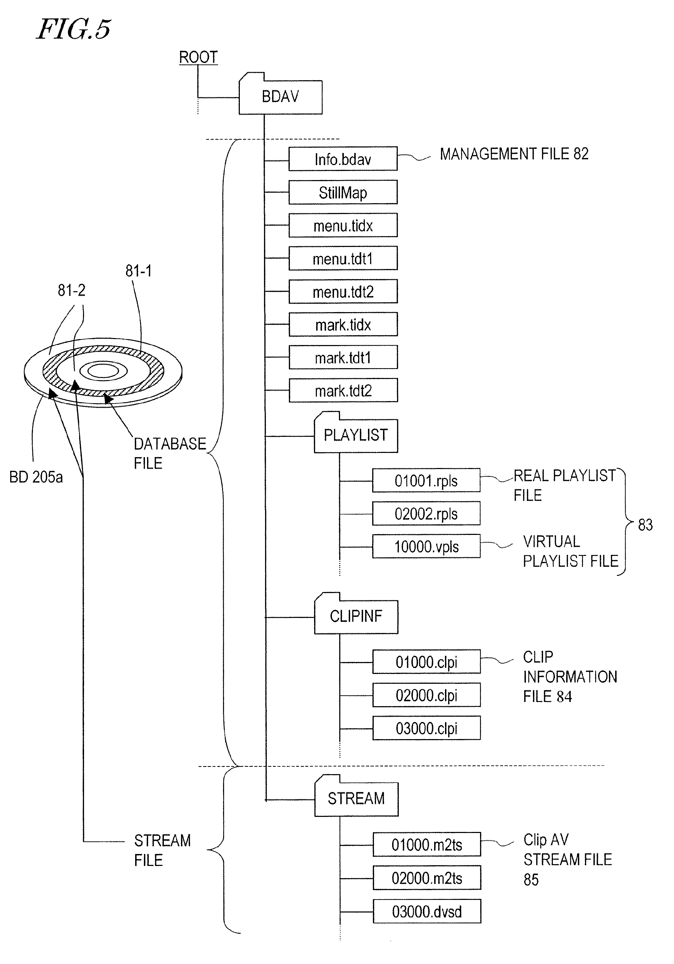

Next, the recording processing carried out by the TS processing section **204** and the recorded BD **205a** will be described with reference to FIGS. **4** and **5** in terms of the data structure and the file structure.

Portions **(a)** through **(e)** of FIG. **4** show a correlation between a transport stream and a clip AV stream that has to do with the recording processing carried out by the recorder **100.** For the purpose of reference, portion **(a)** of FIG. **4** shows a full TS **70,** in which TS packets, including the data of three programs **X, Y** and **Z,** may be arranged in series, for example. Portion **(b)** of FIG. **4** shows a partial TS **71** that has been generated by the digital tuner **201a** from the full TS **70.** The partial TS **71** is a stream formed by extracting some packets from the continuous full TS. Thus, in the partial TS **71,** those packets are dispersed discretely on the time axis. However, the intervals between those packets have been adjusted by the sender of the full TS so as to satisfy the conditions to make the decoder decode appropriately. Those "conditions" are laid down by the MPEG standard such that the buffer memory of a TS system target decoder (T-STD), defined as an ideal model of an MPEG-2 TS, does not cause an overflow or underflow.

The partial TS **71** may include the TS packets about the program **X,** for example.

Portion **(c)** of FIG. **4** shows a clip AV stream **72,** in which source packets are arranged continuously. Those source packets are identified by source packet numbers (SPN) #1, 2, 3 and so on.

Portion **(d)** of FIG. **4** shows the data structure of a source packet **73,** which has a fixed data length of 192 bytes. More specifically, each source packet **73** is formed by adding a TP extra header **74** of 4 bytes to the top of a TS packet **75** of 188 bytes. The source packetizer generates the source packet by adding the TP extra header **74** to the top of a TS packet in the partial TS.

Portion **(e)** of FIG. **4** shows the data structure of the TP extra header **74.** The TP extra header **74** is made up of a copy permission indicator (CPI) **76** of 2 bits and an arrival time stamp (ATS) **77** of 30 bits. The copy permission indicator (CPI) **76** indicates, by its bit value, how many times (i.e., zero times (copy prohibited), only once or an unlimited number of times) part or all of the clip AV stream **72** may be copied. The arrival time stamp (ATS) **77** describes the time at a precision of 90 kHz.

It should be noted that the clip AV stream **72** shown in portion **(c)** of FIG. **4** is written on the BD **205a** using a set of 32 source packets (6 KB) as a unit. Such a unit is called an "aligned unit". The aligned unit is defined because the BD **205a** uses sectors each having a size of 2 KB and can align the sectors on the basis of 32 source packets.

Next, it will be described with reference to FIG. **5** how the clip AV stream is recorded on the BD **205a.** Since the clip AV stream may be recorded on the HDD **205b,** the same data structure may be used. However, as the HDD **205b** is not usually removed from the recorder **100** and installed in another device, the data may be written there using a unique data structure as well.

FIG. **5** shows a storage area on the BD **205a** and its directory/file structure. The BD **205a** includes a gathered file area **81-1** and a real-time data area **81-2.**

The gathered file area **81-1** has a storage capacity of several hundreds of megabytes. In the gathered file area **81-1,** stored are management information files (or database files) for managing the playback of the clip AV stream. As shown in FIG. **5****,** there are multiple types of database files including a management file (Info.bdav) **82,** playlist files (01001.rpls and 10000.vpls) **83** and a clip information file (01000.clpi) **84.** In the playlist files **83,** PlayItem indicating the presentation order and playlist marks are described. In the clip information files **84,** sequence information representing continuous intervals such as STC sequence, ATC sequence and "ProgramInfo" and entry point information such as entry point map ("EP MAP") for random access and special playback are described.

The database files stored in the gathered file area **81-1** are accessed rather frequently. That is why the gathered file area **81-1** is located at the center of the storage area of the BD **205a** that can be accessed efficiently. Also, the database files are indispensable for playing back a moving picture stream such as the clip AV stream. Thus, an error contained there, if any, would cause a serious trouble. For that reason, the database files are backed up on the same BD **205a.**

On the other hand, the real-time data area **81-2** has a storage capacity of 23 to 27 gigabytes. In the real-time data area **81-2,** stored is a stream file representing the clip AV stream (e.g., a clip AV stream file (01000.m2ts) **85**). Unlike the database files described above, a read error of a stream file, if any, would have only a local effect. But the stream file needs to be read continuously. That is why write processing is carried out so as to guarantee continuous reading rather than reducing the errors. Specifically, the clip AV stream file **85** is written on a continuous area (i.e., a continuous logic sector) with a minimum size of 12 megabytes. This minimum size of data to be written is called an "extent". It should be noted that a DV stream could also be written on the real-time data area **81-2.** In the following description, however, the clip AV stream is supposed to be written there.

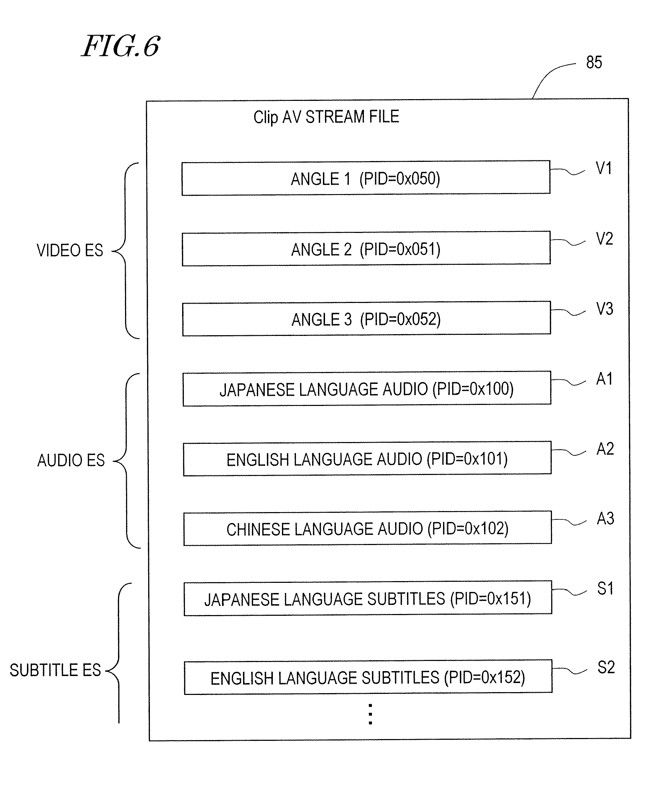

FIG. **6** schematically shows a number of ES included in the clip AV stream **85.** The clip AV stream file **85** includes multiple video ES, multiple audio ES and multiple subtitle ES. Supposing the clip AV stream file **85** contains a movie, for example, the file **85** includes three video ES **V1, V2** and **V3** that were shot from mutually different angles. Likewise, the file **85** also includes three audio ES **A1, A2** and **A3** in three different languages of Japanese, English and Chinese and multiple subtitle ES **S1, S2, etc.** in mutually different languages including Japanese and English. As described above, different ES PID values are allocated to the respective ES. FIG. **6** shows examples of PIDs that are allocated to the respective ES. For the sake of convenience, according to this preferred embodiment, an ES with an ES PID value of 0x01 is supposed to be stored in a TS packet with the same PID value and read and written by reference to that PID value. However, if the recorder **100** can extract a TS packet including the target ES data correctly, any other method may be adopted, too.

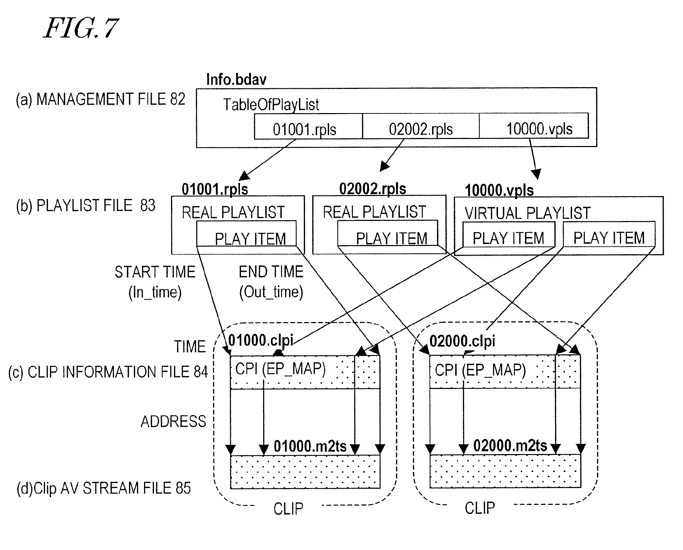

Next, the correlation among the management file **82,** the playlist file **83,** the clip information file **84** and clip AV stream file **85** will be described with reference to portions **(a)** through **(d)** of FIG. **7****,** which shows a relationship between the management information and the stream data. The management information is shown in portions **(a)** through **(c)** of FIG. **7****,** while the stream data is shown in portion **(d)** of FIG. **7****.** Portion **(a)** of FIG. **7** shows a table of playlists described in the management file (Info.bdav) **82.** That is to say, a table of playlist file names that signify the playlists on the BD **205a** is stored in the management file **82.** As used herein, the "playlist" refers to a piece of information that defines a playback route for a part or all of more than one clip AV stream.

Portion **(b)** of FIG. **7** shows playlists that are described in the playlist file **83** and that have extensions rpls and vpls. The playlists are classifiable into real playlists and virtual playlists. A real playlist playlist may be generated by the recorder **100** when stream data is written for the first time, for example, and its playback route is designated from the beginning through the end of a moving picture. Meanwhile, a virtual playlist is designated by the user with respect to the stream data written, and therefore, the user can specify any locations and ranges he or she likes.

Each range of a playlist is defined by respective play items in the playlist specifically, the play items describe a start time (In_time) corresponding to the presentation start time and an end time (Out__time) corresponding to the presentation end time. The start and end times are described as presentation time stamps (PTS) specifying the presentation time of a video frame played back and the output time of an audio frame reproduced. Just after a recording operation has been finished, a real playlist usually defines only one play item to specify the start and end times of a moving picture. Meanwhile, a virtual playlist may define any number of play items. Multiple play items may be provided for a single virtual playlist and may be described so as to designate mutually different moving picture streams.

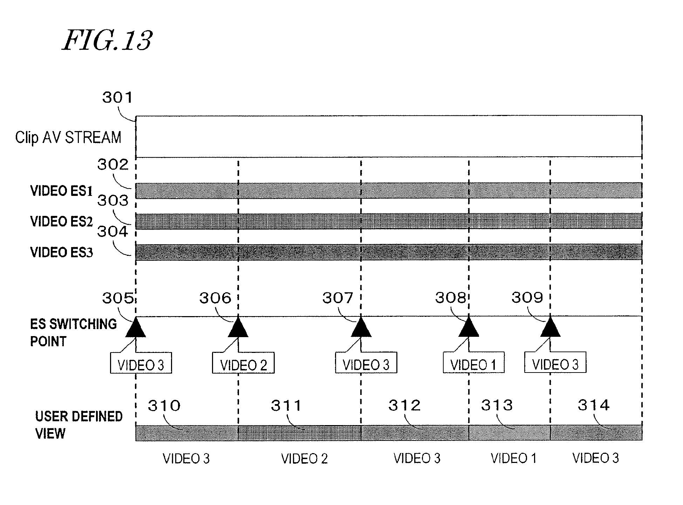

Portion **(c)** of FIG. **7** shows a time/address conversion table (EP_map) **84** that is described in clip information files **84** with an extension clpi. The conversion table (EP_map) **84** shows a correspondence between the presentation time of a clip AV stream and an address at which the data to be presented at that time is stored. By reference to this conversion table **84,** the address in the clip AV stream, at which the data to be presented at that time is stored, can be detected based on the start time (In_time) and end time (Out_time) specified by the play item. The principle of conversion using this conversion table **84** will be described more fully later with reference to FIGS **13** through **15****.**

Portion **(d)** of FIG. **7** shows a moving picture stream that is stored in clip AV stream files **85** with an extension m2ts. In this portion **(d)** of FIG. **7****,** the files "01000.m2ts" and "02000.m2ts" are clip AV stream files.

As shown in portions **(c)** and **(d)** of FIG. **7****,** a single clip information file is provided for each single clip AV stream file on the BD **205a.** Such a combination of a clip AV stream file and a clip information file will be referred to herein as a "clip".

In this preferred embodiment, in a situation where there are multiple video ES, multiple audio ES and multiple subtitle ES (see FIG. **6****),** "ES selection information" is introduced to designate the first ES to play back (which will be referred to herein as a "default ES"). Specifically, in this preferred embodiment, ES selection information, designating a default ES for each play item (and STC sequence and program sequence), is added as a piece of management information. As the ES selection information, an elementary stream PID (ES PID) may be used. Alternatively, according to a higher degree of abstraction, a component tag defined by a broadcast standard such as the ARIB standard may also be used.

In this preferred embodiment, mark information as defined by a conventional standard such as the BD-RE standard is used as the ES selection information. According to the BD-RE, a playlist mark corresponds to the mark information. The playlist mark is stored in the playlist file **83.**

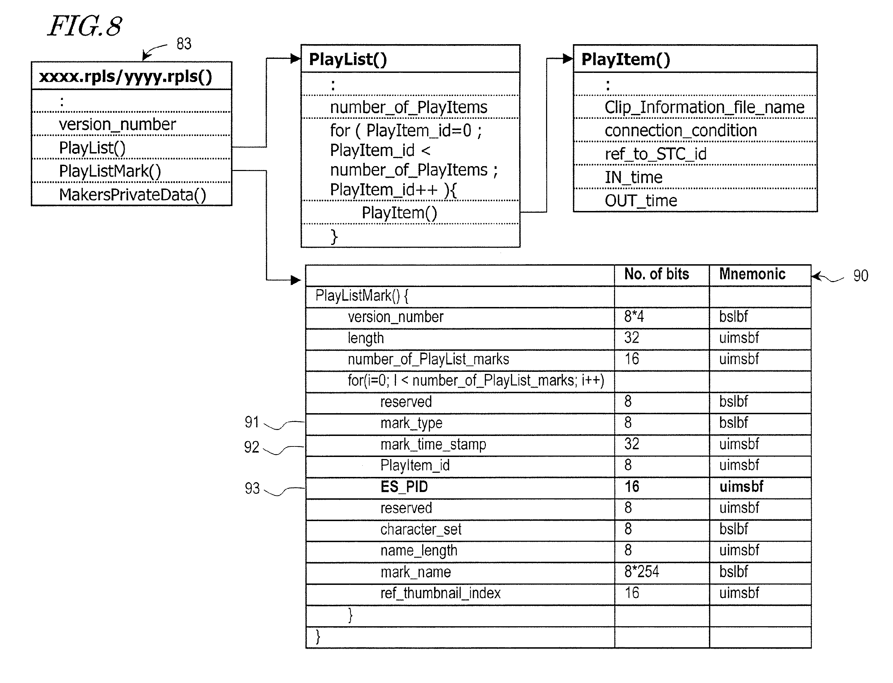

FIG. **8** shows the information (entries) to be stored in the playlist file **83** and its data structure. A playlist mark (PlayListMark) entry **90** is defined for the playlist mark.

In the playlist mark entry **90,** a mark type (mark_type) field **91,** a mark time stamp (mark_time_stamp) field **92,** ES selection information (ES_PID) field **93** and so on are defined. The mark_type field **91** indicates the type of the mark. According to the BD-RE standard, a bookmark, a resume mark and so on are defined as mark types. According to this preferred embodiment, a default ES designating mark (Default-ES-mark) is defined as a new type. For example, 0x03 may be defined as its value. The following Table 1 shows relations between the numerical values defined for the mark type field **91** and the marks.

**Table 1**

| Mark_type | | |
|---|---|---|
| 0x00 | resume-mark | indicates playback resume point |
| 0x01 | book-mark | indicates playback entry point |
| 0x02 | skip-mark | indicates skip point |
| 0x03 | default-ES-mark | indicates ES to be played back by default |
| 0x04-0x8F | Reserved | |
| 0x90-0xFF | Reserved | |

The default ES designating mark corresponds to the ES selection information described above. In a playback period from one default ES designating mark to the next, an ES, identified by ES PID that has been designated in the ES_PID field **93,** is selected by default and played back. One default ES designating mark may be set at the top for each of audio, video and subtitles.

The other marks in Table 1 have the following functions. The resume mark specifies a playback resume point and is set if the playback has been once suspended. This mark is provided such that the playback can be resumed where it was suspended once. The bookmark is provided as a mark that allows the user to specify the start point of his or her favorite scene, for example. The skip mark is provided to allow the user to skip the rest of the program from that point through the end. There are a chapter mark and other marks, but the detailed description thereof will be omitted herein.

The mark_time_stamp field **92** contains information to specify the playback point of the ES to play back. For example, in the mark_time_stamp field **92,** the presentation/output timing is described as a time on the STC time axis (i.e., a mark time stamp). It should be noted that since multiple play items can be defined in the playlist file **83,** the play item ID (PlayItem_id) designates which play item should be dealt with. The mark time stamp **92,** as well as the play item ID, is treated as a piece of playback point information.

In the ES selection information (ES_PID) field **93,** ES selection information, designating the ES to select, is described. The BD-RE 1.0 standard defines a field that specifies an ES PID value in its data structure. And that field corresponds to the ES selection information (ES_PID) field **93.**

Once the default ES designating mark has been defined as the playlist mark, the ES_PID value specified by either the user or the component tag is put into the "reserved" section shown in FIG. **8****.** Then, the point at which the ES are preferably changed is set as the playback point information in the play item ID and the mark time stamp **92.**

Since the storage medium on which the default ES designating mark has been recorded includes information that designates the ES to play back, the default ES should not change from one device to another. In addition, the user can designate any ES as a default one. For example, if a default ES designating mark, including ES selection information indicating that the English language audio is now selected and the playback point information showing the top of the playlist playlist, has been recorded, the mark is interpreted that the English language audio should be selected by default when the playlist is read.

By adopting such a method that uses a playlist mark, the ES selection information can be defined, in compliance with the conventional standards, such that the ES automatic selection function is activated by a compatible device.

The playlist mark can be defined on a playlist basis, and therefore, multiple playlists with mutually different pieces of default ES information can be defined. For example, a single stream including a plurality of ES may be defined as a plurality of programs with mutually different default ES. Specifically, suppose a number of playlists that refer to the same clip are prepared, a default ES designating mark that selects Japanese by default is set for one of those playlists, and a default ES designating mark that selects a different language by default is set for another playlist. By adopting such settings, a plurality of virtual programs with mutually different audio ES can be defined.

It should be noted that the method of defining the default ES designating mark described above is just an example. If the same types of information are included, a different data structure may be adopted as well. For example, identification can be made with a character string that has been put into a mark_name field, instead of the mark-type field. Optionally, besides adding fields to the play item or using the default ES designating marks, three different default ES for video, audio and subtitles or sequence information that defines those sets may be drawn up as a new table. Also, the information to specify the range of the default ES may be either location information such as a playlist mark or information about the start and end points. As the location information, either time information such as presentation time stamp (PTS) or the number of fields or stream address information such as a sector or packet count may be used. At least one of these should be included.

The playlist file **83** also has an entry called PlayList(), which corresponds to the "playlist" described above. At a low-order location of the playlist information (PlayList), described are play items (PlayItem) #1, #2, and so on, each of which stores the file name of the clip information file to play (Clip_Information_file_name), an identifier to identify an STC (ref_to_STC_id), a start time (In_time), an end time (Out_time) and so on.

The method that uses the BD-RE described above does not have to be adopted. Instead, the same result can be obtained as long as the storage medium stores management information and a stream in combination. For example, a similar result can be achieved even on the DVD-VR format by replacing the playlist with Program, PlayItem with CELL, and playlist mark with Entry Point. The same is true of the other data formats, too.

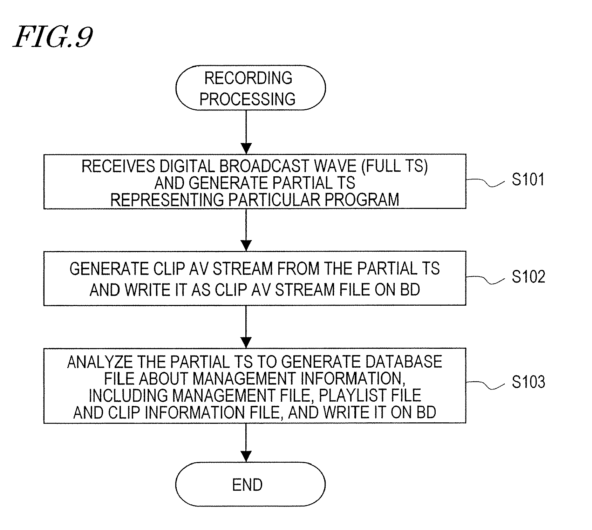

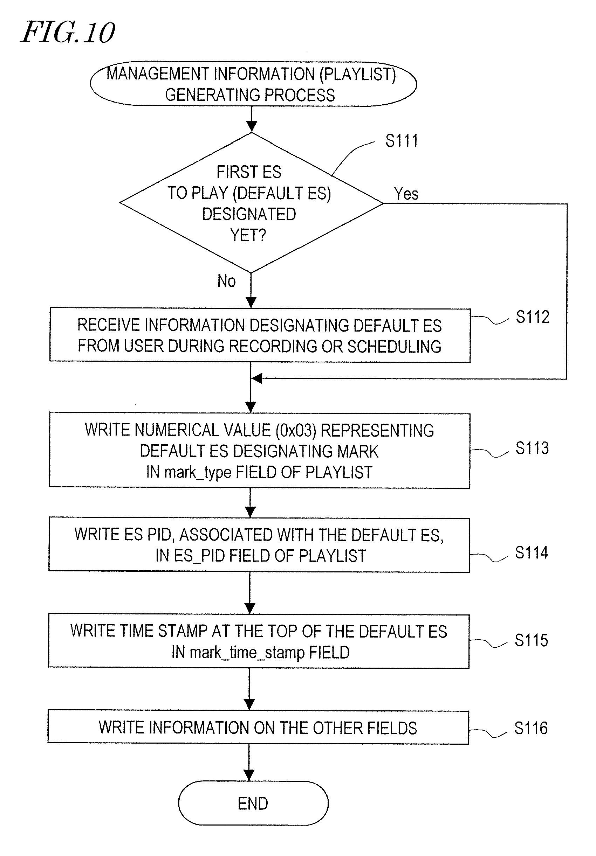

Hereinafter, it will be described with reference to FIGS. **9** and **10** how the recorder **100** performs the processing of recording a digital broadcast. As a result of the recording processing, various files with the file structure shown in FIG. **5** are recorded on the BD **205a.**

FIG. **9** shows the procedure of the recording processing. First, in Step **S101,** the digital tuner **201a** receives a digital broadcast wave as a full TS and generates a partial TS representing a particular program. Next, in Step **S102,** the recording control section **254** of the TS processing section **204** generates a clip AV stream from the partial TS and writes it as a clip AV stream file on the BD **205a.** Subsequently, in Step **S103,** the management information generating section **253** of the TS processing section **204** analyzes the partial TS, thereby generating database file about the management information, including a management file, a playlist file and a clip information file. The recording control section **254** writes the database files thus generated on the BD **205a.**

Next, the processing step of generating a playlist file, which is included in Step **S103,** will be described with reference to FIG. **10****,** which shows the procedure of generating a playlist. First, in Step **S111,** the management information generating section **253** determines whether the first ES to play (i.e., the default ES) has been designated or not. If the answer is NO, the process advances to Step **S112.** On the other hand, if the answer is YES, then the process advances to Step **S113.**

In Step **S112,** the management information generating section **253** receives information designating the default ES from the user during either recording or setting a recording schedule. According to this preferred embodiment, the default ES is supposed to be designated in accordance with the user's instruction. That is to say, the user is supposed to designate the default ES manually.

The user can be notified by the recorder **100** of the fact that there are a number of ES. For example, an SI packet included in a digital broadcast wave (full TS) stores a table that describes information about the electronic program guide (EPG). That is why by getting and analyzing the SI packet during either recording or scheduling, the recorder **100** can know in advance whether the program to record includes a plurality of ES. The recorder **100** may notify the user of this result and may receive the user's instruction on which ES he or she designates as a default ES. In recording a movie, for example, if both English language audio and subtitles and Japanese language audio and subtitles are selectable in any combination, the user may select English language audio as a default ES and Japanese language subtitles as a default ES. As another example, if both video being shot from behind the catcher and video being shot from behind the center fielder are selectable in recording a telecast of a baseball game, the user may select the video being shot from behind the center fielder as a default ES.

The ES selection information about the default ES that has been designated by the user during scheduling, along with information about the scheduled recording date and time and channel, forms recording schedule information. The recording schedule information may be retained in the RAM **212** (or flash ROM) of the recorder **100** and the default ES is set in accordance with the ES selection information when the recording schedule is put into practice.

In Step **S113,** the management information generating section **253** writes a numerical value (0x03) representing the default ES designating mark in the mark_type field 91 of the playlist. Next, in Step **S114,** the management information generating section 253 writes an ES PID value, associated with the default ES, in the ES_PID field **93** of the playlist. Then, in Step **S115,** the management information generating section **253** writes the time stamp at the top portion of the default ES in the mark__time_stamp field **92.** As used herein, the "top portion" of video is a picture (i.e., frame or field) to be presented first, that of audio is an audio frame to be output first, and that of subtitles is a character string to be displayed first. Thereafter, in Step **S116,** the management information generating section **253** writes information on the other fields of the playlist mark **90** shown in FIG. **8** and on the other entries (including PlayList entry and PlayItem entry) of the playlist file.

By performing these processing steps, the recorder **100** can record not only a program but also the ES selection information, designating the first ES to play, as a piece of management information on the BD **205a.**

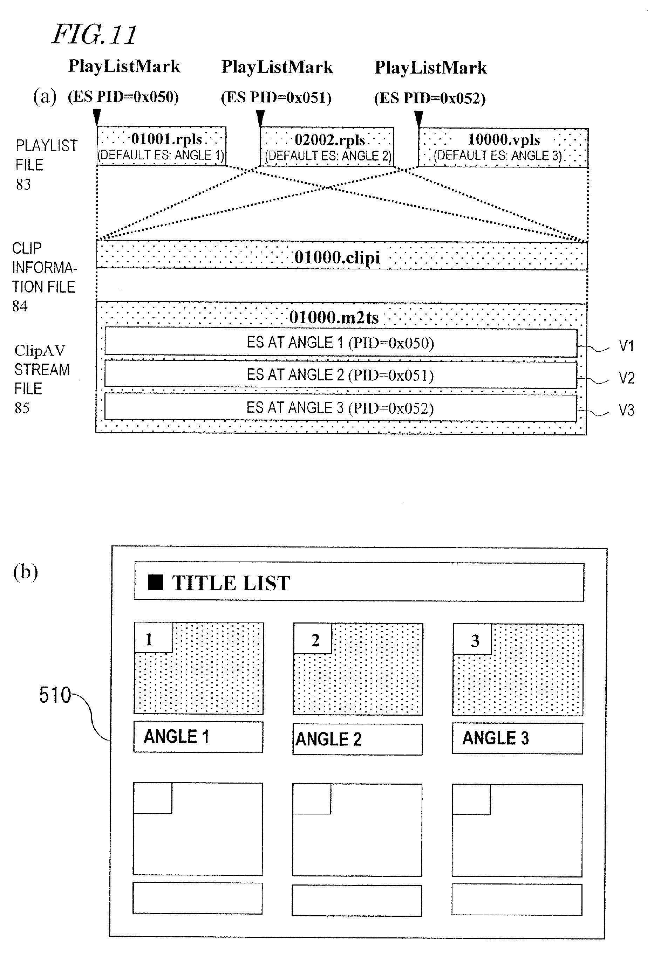

FIG. **11(a)** shows relations between real/virtual playlists that define the default ES designating marks and multiple video ES. In the mark_type field **91** of each playlist, written is the numerical value 0x03 representing a default ES mark.

The real playlist file 01001.rpls includes ES selection information that designates ES (V1) at Angle #1 as a default ES. More specifically, 0x050 is written in the ES PID field **93** corresponding to the playlist mark of the real playlist. This numerical value corresponds to the ES_PID value 0x050 of ES(V1) at Angle #1.

On the other hand, the two virtual playlist files 02002.vpls and 10000.vpls include ES selection information that designates ES(V2) and ES(V3) at Angles #2 and #3 as their respective default ES. Specifically, 0x051 and 0x052 are described in the respective ES PID fields **93.** These numerical values correspond to the ES_PID values 0x51 and 0x52 of ES(V2) and ES(V3) at Angles #2 and #3, respectively.

In playing back a content, the playback control section **255** shown in FIG. **3** reads the management information first and sends it to management information analyzing section **256.** In response, the management information analyzing section **256** extracts a default ES designating mark from the playlist mark entry **90** by reference to the mark_type field **91.** Then, by reference to the ES selection information (ES_PID) field **93,** the management information analyzing section **256** determines which ES to play and then sends an instruction to read the ES, along with its ES_PID value, to the playback control section **255.** Furthermore, the management information analyzing section **256** locates the playback start point of that ES by reference to the time stamp in the mark_time_stamp field **92.** These processing steps are carried out on every type of data to read, including video, audio and subtitles, in the content. As a result, for every type of data, a read instruction is sent to the playback control section **255** and a stream including every data is read out. At the same time, the management information analyzing section **256** sets the PID, attached to the TS packet, in the demultiplexer **257** for the respective types. As a result, the demultiplexer **257** can demultiplex the clip AV stream that has been read out by the playback control section **255** and extract TS packets of the respective types.

It should be noted that there is no need to provide the same number of playlist files as that of the ES as shown in FIG. **11(a)****.** For example, only a real playlist may be provided and the ES_PID value defined as the ES selection information may be arbitrary.

FIG. **11(b)** shows an example of a list screen picture **510** in a situation where there are playlists with video default ES designating marks. This screen picture may be displayed on a TV (not shown) connected to the recorder **100.** As shown in FIG. **11(a)****,** there are three playlists (01001.vpls, 02002.vpls and 10000.vpls) with default ES designating marks. The management information analyzing section **256** locates the default ES designating marks in the respective playlist playlists. Then, the management information analyzing section **256** instructs the demultiplexer **257** to separate and extract the respective ES and also instructs the decoders **258** to **260** to decode the respective ES. Furthermore, the management information analyzing section **256** sends control information, showing the presence of a plurality of playback routes, to the graphic control section **207.** On receiving that control information, the graphic control section **207** sets the display locations such that thumbnail pictures #1 to #3, representing the respective ES with the default ES designating marks, are displayed side by side on the TV monitor and then outputs a display signal that would realize such a presentation. As a result, video pictures representing the respective ES are displayed on the TV screen. And the user can check the contents of the respective video pictures as selectable playback routes.

The thumbnail pictures may be either still pictures or moving pictures. Also, for example, "Angle #1", showing the identity of the ES, may also be presented under each thumbnail picture. Such a character string may be described by the recorder **100** as a piece of each playlist information during recording. For example, the recorder **100** can write the character string such as Angle #1 in either the PlayList_name field in the playlist file **83** or the mark_name field in the playlist mark entry **90** shown in FIG. **8****.**

While watching the TV screen **510,** the user selects one of the thumbnail pictures that he or she wants to get played back using a remote controller (not shown) attached to the recorder **100.** Then, the recorder **100** starts to play back the ES that has been designated as a default ES. By introducing the default ES designating marks, the same ES will always be played back first, and the difference in default selection can be eliminated, no matter what device is used. The recorder **100** of this preferred embodiment generates and stores ES selection information such that the default ES is automatically selected during recording unless particularly designated by the user.

According to the thumbnail pictures #1 through #3 shown in FIG. **11(b)****,** the moving pictures to be presented as either thumbnails or smaller pictures on the display screen **510** are different from each other between the respective programs #1 through #3. That is to say, those moving pictures would look to the user's eye as if there were multiple programs in the single clip AV stream file **85.** And when those pictures actually start to be presented, different video pictures come up, too. By using such a GUI, the user can select another ES included in the same program as if he or she were selecting a totally different program. In this manner, even if thumbnail pictures are presented for the respective default ES designating marks or if those pictures are simply presented as a list, a program including multiple ES can still be played back and managed very sensitively.

It should be noted that even in the prior art, if multiple playback intervals of more than one stream and/or playback intervals that cover a plurality of streams and their presentation order are defined using a virtual playlist, multiple virtual programs could be presented with respect to a single stream. However, the playlist of this preferred embodiment includes ES selection information for selecting a particular ES from a number of ES, which is a difference from the conventional virtual playlist.

Also, according to this preferred embodiment, the ES selection information is defined within the management information separately from the stream itself. That is why even when the ES selection information is changed afterward, there is no need to modify the data in the stream, thus cutting down the complexity of processing significantly. And in this respect, the technique of the present invention is quite different from that of Patent Document No. 1 in which information instructing that the ES to play should be changed (i.e., the multi-view automatic switching table) is described within the stream.

If a GUI is used as in the example shown in FIG. **11****,** various modifications can be made. For example, if the virtual playlist file 10000.vpls, designating ES at Angle #3 as a default ES for the program, were deleted, then an ES unit editing interface, e.g., deleting only ES at Angle #3 from the clip AV stream file **85,** could be provided. The deletion of unnecessary ES could lead to an increase in the space left in the storage medium. For that reason, such a function is very useful.

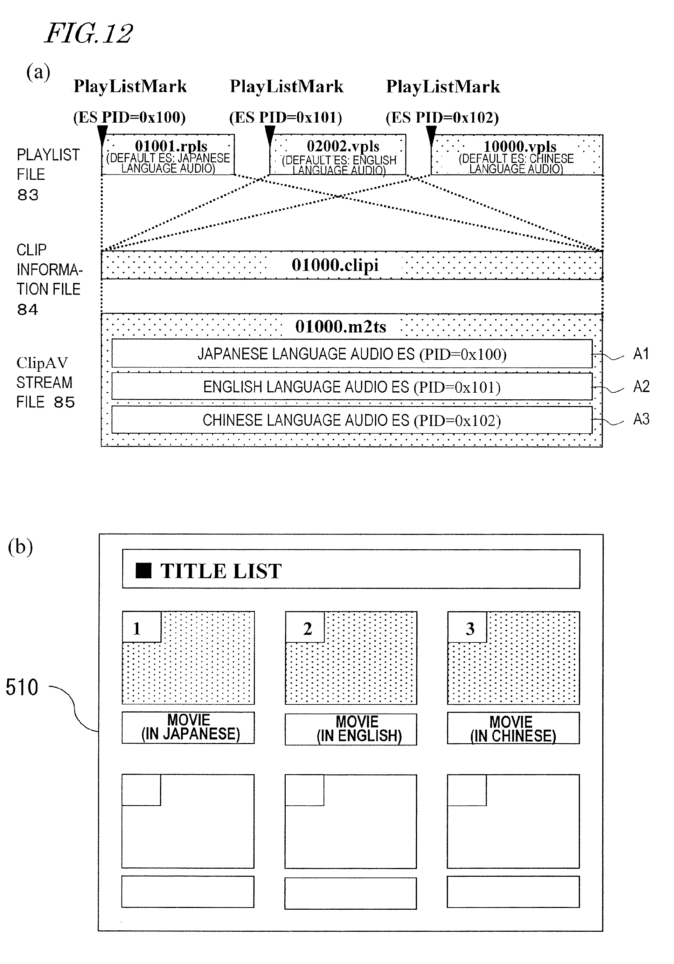

In the foregoing example, exemplary playlists and list screen picture have been described for a situation where there are multiple video ES. Hereinafter, playlists and list screen picture to be used in a situation where there are multiple audio ES will be described with reference to FIGS. **12(a)** and **12(b)****.**

FIG. **12(a)** shows relations between real and virtual playlists, for which default ES designating marks are defined, and a plurality of audio ES. In the mark_type field **91** of each of these playlists, described is a numerical value 0x03 representing the default ES designating mark.

The real play list file 01001.rpls includes ES selection information that designates Japanese language audio ES(A1) as a default ES. More specifically, 0x100 is written in the ES PID field **93** corresponding to the playlist mark of the real playlist. This numerical value corresponds to the ES_PID value 0x100 of ES(V1) at Angle #1. On the other hand, the two virtual playlist files 02002.vpls and 10000.vpls include ES selection information that designates English language audio ES(A2) and Chinese language audio ES(A3) as their respective default ES. Specifically, 0x101 and 0x102 are described in the respective ES PID fields **93.** These numerical values correspond to the ES_PID values 0x101 and 0x102 of ES(V2) and ES(V3) at Angles #2 and #3, respectively.

FIG. **12(b)** shows an example of a list screen picture **510** in a situation where there are playlists with audio default ES designating marks. The recorder **100** displays thumbnail pictures #1 through #3 for the respective playlists side by side. But these thumbnail pictures #1 through #3 may be the same. Even so, these pictures are still identifiable by their character strings. The data fields to store those character strings are PlayList name field, mark_name field and so on as in the example described above.

As for the video and audio described above, the default ES may be automatically selected by the recorder **100.** For example, using the multi-view automatic switching table of Patent Document No. 1 mentioned above, the management information generating section **253** may designate an ES, specified by the broadcaster, as the default ES. Alternatively, the management information generating section **253** may designate an ES, specified by the broadcaster in the SI/PSI information in the stream, as the default ES. Furthermore, as the ARIB standard defines the component tag of the ES to be selected by default during viewing and listening, the management information generating section **253** may also generate automatically a default ES designating mark that designates the ES, specified in the component tag, as the default ES.

The video ES and audio ES have been described separately with reference to FIGS. **11** and **12****.** However, as the video ES and the audio ES can be designated independently of each other, the examples shown in FIGS. **11** and **12** may be combined with each other.

If the BD-RE standard were extended, then the default ES could be designated as described above. Just with this extension, however, could not change ES at an arbitrary point in a play item or a program sequence. For example, supposing the user is viewing a sport broadcast including three video ES being shot at three different camera angles, he or she may want to change views occasionally according to his or her preference. If the default ES designating mark is provided, the user can designate the ES to start playback with but cannot change the ES once the playback has been started.

In view of such a problem, processing for changing ES to play at an arbitrary point in time by further extending the BD-RE standard will be described. The timing to change the ES and the ES to newly select can be defined by the user.

FIG. **13** shows an example in which the ES are changed into a desired one at an arbitrary timing. The clip AV stream **301** is supposed to include video ES1 **302,** video ES2 **303** and video ES3 **304.**

With respect to such a clip AV stream **301,** the management information generating section **253** of the recorder **100** sets multiple ES switching points **305, 306, 307, 308** and **309.** Each of these ES switching points can be located by either the playback duration of the video as measured from the top of the clip AV stream **301** or information representing that duration.

The management information generating section **253** provides a number of default ES designating marks within the playlist file **83.** In the example described above, the default ES designating mark is defined so as to indicate the top of the ES selected. In this case, however, each of these default ES designating marks may be defined so as to indicate a halfway point of the ES. More specifically, the ES identification information (i.e., the ES_PID value) to identify the ES to newly select and information about the switching point (i.e., mark_time_stamp value) may be defined in combination as each default ES designating mark.

For example, the playback point **305** shown in FIG. **13** is a default ES designating mark to designate the first ES to play and describes the ES_PID value of the video ES3 and the time stamp of the top picture. The next ES switching point **306** is defined as a default ES designating mark that describes the ES_PID value of ES2 newly selected and the time stamp of the picture of ES2 at that point in time. The other switching points **307, 308** and **309** are also defined just like the ES switching point **306.** The default ES designating marks defining the playback points **305** and **306** to **309** have quite the same data structure. These marks are different just in whether the time stamp described indicates the top of the ES or a halfway point thereof.

Using such a clip AV stream **301** and these ES switching points, the TS processing section **204** and the decoder **206** start playback with video 3 represented by video ES3, changes the videos into video 2 represented by video ES2 at the next switching point, and then continues the playback while changing the videos into video 3, video 1 and video 3 in this order at the respective switching points that follow.

Specifically, the management information analyzing section **256** can recognize a plurality of default ES designating marks in the management information, and can also acquire the ES_PID value and the mark_time_stamp value, describing the time stamp of an ES picture to be presented at the playback point, for each of those default ES designating marks. That is why the management information analyzing section **256** instructs the playback control section **255** and the demultiplexer **257** to start playback with ES3 first. Thereafter, on sensing, by the mark_time_stamp value, that the playback switching point **306** has been reached, ES2 starts to be played back at that point in time based on the ES__PID value. After that, the designated ES will be played back one after another at the points in time specified by the default ES designating marks in a similar procedure.

Next, it will be described how the user can perform an editing process on a program, including a plurality of ES, by setting ES switching points at arbitrary playback points of that program using the recorder **100** after the recorder **100** has recorded that program. In the following example, the clip AV stream representing the program including a plurality of ES is supposed to be stored on the BD **205a.** Alternatively, the clip AV stream may also be stored on the HDD **205b.**

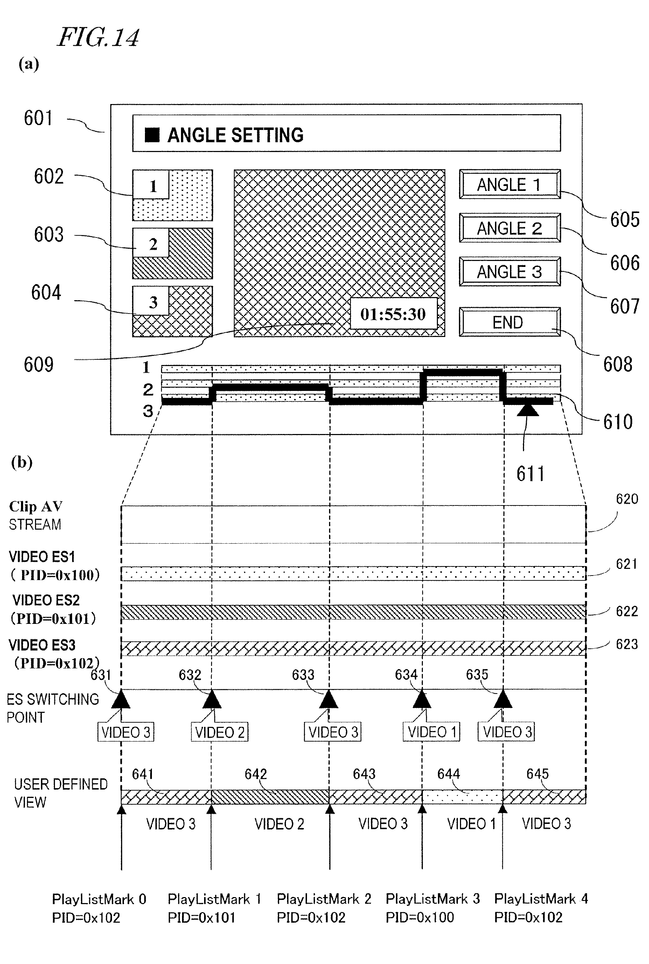

Portion **(a)** of FIG. **14** shows an example of a graphical user interface (GUI) that is displayed on an editing screen, and portion **(b)** of FIG. **14** shows correlations between the ES being edited and the default ES designating mark. For example, when the recorder **100** enters an "editing mode" for performing an editing process on the video in accordance with the user's instructions, the recorder **100** displays the editing screen picture **601** shown in portion **(a)** of FIG. **14****.**

In the exemplary GUI shown in portion **(a)** of FIG. **14****,** the user not only specifies his or her desired ES switching point (or switching time) but also a video ES to start being played at that point in time with respect to a TS **620** including the three video ES **621, 622** and **623** shown in portion **(b)** of FIG. **14****.** As a result, a video ES to be played back in the interval from that switching point to the next is determined. If the user specifies a plurality of ES switching points and a plurality of video ES for a single content, the videos can be switched, at any time he or she wants, into one being shot at his or her desired angle.

The editing screen picture **601** is divided into various areas to display thumbnail pictures or GUI items. In thumbnail areas **602, 603** and **604,** the videos represented by the respective video ES are presented as moving pictures in parallel with each other.

In the representative thumbnail area **609** shown in portion **(a)** of FIG. **14****,** displayed is the video represented by one of the three video ES that is supposed to be presented at the location of the cursor **611.** This video ES has been designated at the previous switching point. In the example shown in portion **(a)** of FIG. **14****,** the third video is designated at the location of the cursor **611.** Therefore, in the representative thumbnail area **609,** the same video as that displayed in the thumbnail area **604** is presented on a larger scale.

The buttons **605** to **607** are provided for video ES1, video ES2 and video ES3, respectively. In starting to play back video or during playing back video, the user handles the instruction receiving section **215** while monitoring the editing screen picture **601,** thereby selecting one of the three buttons that is associated with his or her desired angle and getting his or her instruction sent. As a result, at the presentation timing when the instruction is received, associated video ES is selected. Once a video ES has been selected, video represented by that video ES continues to be played back until another video ES is selected next time.

In the example shown in portion **(a)** of FIG. **14****,** the buttons are selected five times in total, including at the beginning of the program, thus setting five ES switching points. Specifically, the buttons **605** to **607** are selected in the order of the button **607,** button **606,** button **607,** button **605,** and button **607.** The ES switching points are set at the points **631, 632, 633, 634** and **635** shown in portion **(b)** of FIG. **14****.** In the playback intervals **641, 642, 643, 644** and **645,** video 3, video 2, video 3, video 1 and video 3 are selected and played back, respectively. The line **610** visually represents the video switching flow. At those five ES switching points, the videos 1, 2 and 3 are presented one after another in the order and times represented by the line **610.**

At the bottom of portion **(b)** of FIG. **14****,** shown are default ES designating marks (playlist marks) 0 through 4, corresponding to the multiple switching points. In the mark_type fields **91** of the respective playlist marks, described is a numerical value 0x03 representing the default ES designating mark. In the mark_time_stamp field **92** on the other hand, described is a time stamp representing that time. And in the ES selection information (ES_PID) field **93,** described is the ES_PID value of the newly selected video ES.

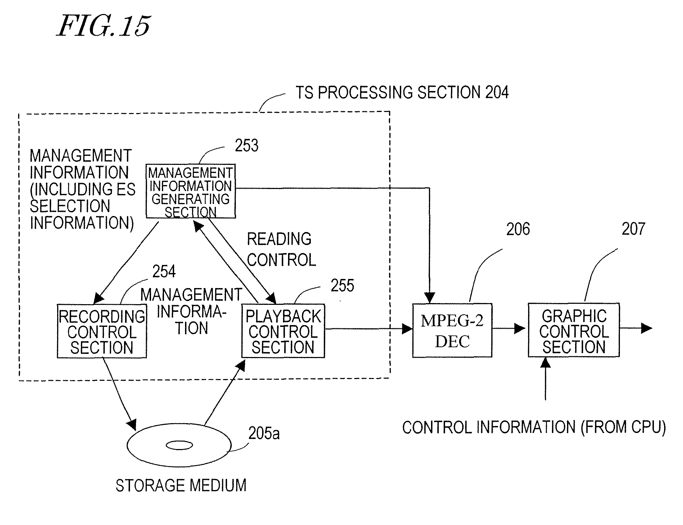

FIG. **15** shows the arrangement of functional blocks in the TS processing section **204** for carrying out the editing process shown in FIG. **14****.** The TS processing section **204** includes a management information generating section **253,** a recording control section **254** and a playback control section **255.**

The management information generating section **253** has not only the functions that have already been described with reference to FIG. **2** but also those of the management information analyzing section **256** that have been described with reference to FIG. **3****.** On the other hand, the recording control section **254** and the playback control section **255** have the same functions as their counterparts that have been described with reference to FIGS. **2** and **3****.**

The playback control section **255** and the management information generating section **253** perform the same processing as the playback control section **255** and the management information analyzing section **256** shown in FIG. **3****,** thereby reading a clip AV stream and its management information from the BD **205a.** This clip AV stream includes a plurality of video ES that were shot at respective angles. The decoder **206** decodes the respective video ES and outputs the respective videos to the graphic control section **207.**

In accordance with the control information supplied from the CPU **211,** the graphic control section **207** adjusts the display locations such that the respective videos are presented in the thumbnail areas **602, 603** and **604** shown in FIG. **14** and that one of those videos is presented in the representative thumbnail area **609.** The video presented in the representative thumbnail area **609** is represented by the video ES that is currently selected at the location of the cursor **611.**

Meanwhile, in accordance with the instruction that has been given by the user by pressing one of those buttons, the management information generating section **253** determines which video should start to be played back from where and generates ES selection information in response to every press on any button. The management information generating section **253** describes the ES selection information thus generated in the management information that has been read from the BD **205a.** More specifically, the management information generating section **253** puts a default ES designating mark associated with each switching point into the playlist mark entry **90** in the playlist file **83.** The management information including the default ES designating mark added is sent to the recording control section **254** and the CPU **211.**

The recording control section **254** updates the management information on the BD **205a** with its own management information. The CPU **211** receives and analyzes that management information, thereby generating control information to show, as a list, in what order and how long the respective video ES will be played back. That control information is sent to the graphic control section **207,** which outputs a signal to present the line **610** shown in portion **(a)** of FIG. **14** in accordance with the control information. As a result, the line **610** is presented on an external display device, such as a TV, which is connected to the recorder **100.**

It should be noted that the editing screen picture **601** shown in portion **(a)** of FIG. **14** is just an example. That is to say, not all of these areas or GUI items have to be provided and their layout may also be changed arbitrarily. For example, to present moving pictures on the thumbnail areas in parallel with each other, processibility to play back the respective thumbnail pictures without a break and a buffer with a capacity that is large enough to store the data generated by the decoding process would be needed. According to the type of the video, however, such hardware or software could be omitted with no problem. For example, in a situation where the object of editing is video that does not have to be changed frequently such as a multi-story program, there would be no problem even if not all of the ES were presented as thumbnail pictures. This is because selection can be made as long as the playback of one ES can be followed by that of another.

In the preferred embodiment described above, a digital broadcast program is supposed to be recorded on the BD **205a.** However, as long as a single program includes a plurality of elementary streams of the same type to be played back selectively, the present invention is also applicable irrespective of the type of the broadcast or the type of the storage medium.

For example, if the configuration of the recorder **100** of this preferred embodiment is adopted, the stream can be recorded on a DVD, instead of the BD **205a.** However, the format of a stream that can be recorded on a DVD is not a TS but an MPEG-2 program stream. Thus, in that case, the recorder may decode the partial TS to generate video and audio digital signals and then perform ES encoding based on the digital signals to generate an MPEG-2 program stream.

In the preferred embodiment described above, either while a program is being recorded or while the program that has been recorded by the recorder **100** is being edited, a default ES switching point is supposed to be set by the recorder **100.** However, the present invention is also applicable even if the device that has recorded a program and the device that should set the default ES switching point are not the same. For example, the recorder **100** can also set the default ES switching point even for a program that has been recorded by another device on a rewritable storage medium or a content that has been written on a read-only storage medium such as a package medium.

That is to say, as already described using the format of the BD-RE standard, the entry of a default ES designating mark can be added to existent management information. For that reason, if the default ES designating mark is added to the management information of a program that has been written on a rewritable storage medium (e.g., a RAM medium such as a DVD-RAM or a BD-RE), the default ES switching point can be set arbitrarily. It is not a problem whether the program has been recorded by the recorder 100 or any other device.

On the other hand, since no additional information can be written on a read-only storage medium (i.e., a ROM medium such as a DVD-R or a BD-ROM), it is impossible to add a default ES designating mark to the management information on the medium or to overwrite the default ES designating mark on the medium. However, the information of the default ES designating mark and the video information do not have to be stored on the same medium. For example, the management information of a ROM medium may be copied onto the HDD **205b** of the recorder **100** and the information of the default ES designating mark may be added to the management information. Optionally, only the default ES designating mark to make a difference may be recorded without copying the management information.

The default ES designating mark may be recorded on a memory other than the HDD (e.g., the RAM **212** or the nonvolatile program ROM **210**). Then, an arbitrary default ES switching point can also be set even on a content stored on a ROM medium.

The recorder **100** preferably stores the IDs to identify respective ROM media uniquely and the information of the default ES designating marks in association with each other. Then, even if the user has removed a ROM medium from the recorder **100** once and then inserts the medium into the recorder **100** again, the default ES switching point that has been set previously can be used as it is.

### INDUSTRIAL APPLICABILITY

A program-recording data processor according to the present invention can record a program, including a number of ES of the same type to be played back selectively (e.g., a digital broadcast program), on a storage medium such as an optical disk, and then receive a user's instruction on with which ES the playback of that program should be started. In accordance with the instruction received, the data processor writes information that designates the first ES to play back on the storage medium. That information specifies the top of the ES to play back first.

Also, by providing information that specifies not just the top of an ES but also a halfway point thereof as playback start points, the data processor can define an ES switching pattern that has been arbitrarily determined by the user over a number of ES. And that switching pattern is reproducible at any time by storing the information on a storage medium.

By using a multi-view program with a plurality of ES, information that designates the first ES to play back, a storage medium that stores the ES switching information, and a data processor for reading an ES from that storage medium in combination, a program including a plurality of ES can be played back and managed easily.

## Claims

1. A data processor comprising:
a receiving section for receiving a multiplexed stream representing a content;
a recording control section for performing processing of analyzing the multiplexed stream and writing the stream on a storage medium and for outputting an instruction to write the processed multiplexed stream on the storage medium; and
a management information generating section for generating management information, which is needed to play back the content, based on a result of the analysis on the multiplexed stream,
wherein the multiplexed stream includes a plurality of data streams of the same type to be selectively played back, and
wherein the management information generating section adds, as the management information, selection information that indicates on which of the data streams the content needs to be played back, and
wherein the recording control section outputs an instruction to further write the management information on the storage medium.

2. The data processor of claim 1, wherein the management information generating section adds, as the selection information, identification information to identify the selected data stream and start point information showing a playback start point on the selected data stream to the management information.

3. The data processor of claim 2, wherein the management information generating section further generates end point information showing a playback end point on the data stream identified and gets the end point information included in the management information.

4. The data processor of claim 2, wherein the management information generating section generates multiple pieces of the selection information and adds those pieces to the management information.

5. The data processor of claim 4, wherein in playing back the content on and after a first time, the management information generating section generates, as a first piece of selection information, identification information to identify a first data stream and start point information to specify the first time as the playback start point, and
wherein in playing back the content on and after a second time, which is later than the first time, the management information generating section generates, as a second piece of selection information, identification information to identify a second data stream, which is different from the first data stream, and start point information to specify the second time as the playback start point.

6. The data processor of one of claims 2 to 5, wherein the management information generating section generates the start point information based on a playback start point that has been specified by a user.

7. The data processor of one of claims 2 to 5, wherein the management information generating section generates the start point information based on a playback start point that has been set in advance.

8. The data processor of claim 1, further comprising:
an instruction receiving section for receiving a delete instruction to delete a designated playback route; and
a recording control section for outputting an instruction to delete, from the storage medium, one of the data streams that is associated with the playback route designated and information about the designated playback route that is included in the management information.

9. A storage medium that stores thereon:
a stream file including a multiplexed stream representing a content, a plurality of data streams of the same type to be selectively played back having been multiplexed together in the multiplexed stream; and
a management information file including management information, which is needed to play back the content and which includes selection information that indicates on which of the data streams the content needs to be played back.

10. A data processor comprising:
a playback control section for reading the management information file and the stream file from the storage medium of claim 9;
a management information analyzing section for retrieving the selection information from the management information file that has been read out and giving an instruction that the data stream, designated by the selection information, be extracted;
a separating section for separating the data stream from the multiplexed stream in accordance with the instruction; and
a decoder for playing back the content based on the separated data stream.

11. The data processor of claim 10, wherein in playing back the content on and after a first time, the management information includes, as a first piece of selection information, identification information to identify a first data stream and start point information to specify the first time as the playback start point, and
wherein in playing back the content on and after a second time, which is later than the first time, the management information includes, as a second piece of selection information, identification information to identify a second data stream, which is different from the first data stream, and start point information to specify the second time as the playback start point, and
wherein in accordance with the first and second pieces of selection information, the management information analyzing section instructs that the first data stream be extracted from the first time until the second time and instructs that the second data stream be extracted on and after the second time.

12. The data processor of claim 10, further comprising a graphic control section for generating a signal to present video on an external device in accordance with control information,
wherein the management information analyzing section outputs control information that shows the presence of a plurality of playback routes in accordance with the first and second pieces of selection information, and
wherein the graphic control section outputs a signal to present pictures, associated with the respective playback routes, side by side in accordance with the control information.

13. A data processor for use to edit a content, the content having been stored in advance as a multiplexed stream on a storage medium, the multiplexed stream including a plurality of data streams of the same type to be selectively played back, the processor comprising:
an instruction receiving section for receiving an instruction to select one of the data streams from a user; and
a management information generating section for generating selection information to designate the selected data stream as a target and outputting the selection information as management information.

14. The data processor of claim 13, wherein the instruction receiving section further receives an instruction to specify a playback start point, and
wherein the management information generating section generates, as the selection information, identification information to identify the data stream selected and start point information showing the start point.

15. The data processor of claim 14, further comprising a recording control section for outputting an instruction to write the selection information on the storage medium.

16. The data processor of claim 14, further comprising a memory to store the selection information.

17. The data processor of claim 14, wherein the instruction receiving section receives instructions to select data streams and instructions to specify playback start points a number of times, and
wherein the management information generating section generates multiple pieces of selection information.

18. The data processor of claim 17, further comprising a graphic control section for generating a signal to present video on an external device in accordance with the control information,
wherein the management information generating section outputs control information, which defines the order of presentation of the data streams and playback intervals of the respective data streams in accordance with the selection information, and
wherein the graphic control section outputs a video signal, representing the order and the playback intervals, based on the control information.
